# EUROPÄISCHE PATENTSCHRIFT

(11) **EP 1 876 056 B1**
(45) Veröffentlichungstag und Bekanntmachung des Hinweises auf die Patenterteilung: **25.03.2015**
(21) Anmeldenummer: 07012440.9
(22) Anmeldetag: 26.06.2007
(51) Int. Cl.: B60R 5/04

(54) **Laderaumabdeckeinrichtung und Kraftfahrzeug mit Laderaumabdeckeinrichtung**
Vehicle boot cover and vehicle with vehicle boot cover
Dispositif de recouvrement de coffre et véhicule avec dispositif de recouvrement de coffre

(30) Priorität: 05.07.2006 DE 102006031103
(43) Veröffentlichungstag der Anmeldung: 09.01.2008
(73) Patentinhaber: GM Global Technology Operations LLC, Detroit, MI 48265-3000 (US)
(72) Erfinder: Glaser, Carsten, 64367 Mühltal (DE); Huck, Hardy, 65428 Rüsselsheim (DE); Polat, Cengiz, 65479 Raunheim (DE)
(74) Vertreter: Daniel, Ulrich W.P.

(56) Entgegenhaltungen:
- EP-A- 1 364 834
- DE-A1- 10 109 651
- DE-A1- 19 906 648
- FR-A- 2 409 172
- FR-A- 2 875 454

## Beschreibung

Die vorliegende Erfindung betrifft eine Laderaumabdeckeinrichtung mit einer um eine vordere Schwenkachse verschwenkbaren plattenförmigen Abdeckung, wobei die Abdeckung von einer Abdeckposition, in der der Laderaum durch die Abdeckung von oben abgedeckt ist, um die vordere Schwenkachse in eine Zwischenposition verschwenkt werden kann, in der die Abdeckung um einen vorbestimmten Winkel verschwenkt ist. Die vorliegende Erfindung betrifft ferner ein Kraftfahrzeug mit einer solchen Laderaumabdeckeinrichtung.

Aus dem Stand der Technik sind unterschiedliche Laderaumabdeckeinrichtungen bekannt, die auch als Hutablage bezeichnet werden und sich zwischen dem Laderaumdeckel und dem Laderaum eines Kraftfahrzeugs erstrecken. So beschreibt die EP 1225093 B1 eine Laderaumabdeckung, die im Wesentlichen ein Abdeckrollo umfasst, das an der Seitenwand des Kraftfahrzeugs geführt ist. Zu diesem Zweck sind zwei seitliche horizontale Führungsschienen vorgesehen, in denen das Abdeckrollo geführt ist. Um den Laderaum freizugeben, kann das Abdeckrollo von einer den Laderaum von oben abdeckenden Abdeckposition innerhalb der Führungsschienen in Richtung der Rückenlehnen der Rücksitze in eine Stauposition verschoben werden, in der das Abdeckrollo aus den Führungsschienen hinter die Rückenlehnen herunterhängt.

Abdeckrollos haben den Nachteil, dass diese nur schwer zu reinigen sind, weshalb sich in der Praxis in erster Linie starre, plattenförmige Abdeckungen durchgesetzt haben. Diese plattenförmigen Abdeckungen können von einer Abdeckposition, in der der Laderaum durch die Abdeckung von oben abgedeckt ist, um eine vordere Schwenkachse in eine Zwischenposition verschwenkt werden, in der die Abdeckung um einen Winkel verschwenkt ist. Meist ist die Schwenkbewegung der Abdeckung mit der Schwenkbewegung des Laderaumdeckels gekoppelt. Die bekannten Abdeckungen sind abnehmbar angeordnet, so dass diese bei Nichtgebrauch entfernt werden können.

Bei den bekannten plattenförmigen Abdeckungen besteht einerseits das Problem, dass das Abnehmen der Abdeckungen bei Nichtgebrauch kompliziert ist, wodurch die Handhabung erschwert ist. Andererseits muss nach dem Abnehmen eine geeignete Stauposition für die Abdeckung gesucht und für eine entsprechende Sicherung derselben innerhalb des Kraftfahrzeugs gesorgt werden, wodurch die Handhabung weiter erschwert ist.

Die EP 1 364 834 A2, siehe Oberbegriff des Anspruchs 1 der vorliegenden Erfindung, beschreibt demgegenüber eine Laderaumabdeckeinrichtung, deren Abdeckung nach dem Verschwenken in die Zwischenposition in Längsrichtung nach unten in eine Stauposition verschoben werden kann, in der die Abdeckung hinter den Rückenlehnen der Rücksitze angeordnet ist, so dass die Abdeckung nicht herausgenommen werden muss, um diese Platz sparend zu verstauen. Überdies weist die Abdeckung einen äußeren, nach unten weisenden, umlaufenden Kragen auf, der der Abdeckung eine größere Steifigkeit verleiht.

Die bekannte Laderaumabdeckeinrichtung hat jedoch den Nachteil, dass die Abdeckung nur schwer oder gar nicht in die Stauposition verschoben werden kann, insbesondere wenn sich bereits Ladegut innerhalb des Laderaums befindet.

Es ist daher eine Aufgabe der vorliegenden Erfindung, eine Laderaumabdeckeinrichtung für ein Kraftfahrzeug mit einer plattenförmigen Abdeckung zu schaffen, die einerseits eine hohe Steifigkeit hat und andererseits eine einfache Handhabung der Abdeckung ermöglicht, insbesondere eine einfache Unterbringung in der Stauposition gewährleistet. Eine weitere Aufgabe der vorliegenden Erfindung besteht darin, ein Kraftfahrzeug mit einer solchen vorteilhaften Laderaumabdeckeinrichtung zu schaffen.

Diese Aufgabe wird durch die in Patentanspruch 1 bzw. 10 angegebenen Merkmale gelöst. Vorteilhafte Ausführungsformen der Erfindung sind Gegenstand der Unteransprüche.

Die erfindungsgemäße Laderaumabdeckeinrichtung für ein Kraftfahrzeug weist eine um eine vordere Schwenkachse verschwenkbare plattenförmige Abdeckung, wie beispielsweise eine so genannte Hutablage, auf. Die Abdeckung kann von einer Abdeckposition, in der der Laderaum durch die Abdeckung von oben abgedeckt ist, um die vordere Schwenkachse in eine Zwischenposition verschwenkt werden, in der die Abdeckung um einen vorbestimmten Winkel verschwenkt ist. Ausgehend von der Zwischenposition kann die Abdeckung dann in Längsrichtung nach unten in eine Stauposition verschoben werden, in der die Abdeckung hinter den Rückenlehnen der Rücksitze angeordnet ist. Unter der Längsrichtung ist hierbei die Richtung zu verstehen, in die sich die Abdeckung in der jeweiligen Schwenkposition erstreckt. Die Abdeckung der erfindungsgemäßen Laderaumabdeckeinrichtung muss somit nicht abgenommen werden, um anschließend einen geeigneten Stauraum zu finden. Vielmehr muss die Abdeckung lediglich um einen vorbestimmten Winkel verschwenkt werden, um diese anschließend in die Stauposition verschieben zu können. Dabei ist die Stauposition hinter den Rückenlehnen der Rücksitze besonders geeignet, da hierdurch wenig Platz innerhalb des Laderaums benötigt wird.

Die Abdeckung weist ferner einen äußeren, nach unten weisenden, umlaufenden Kragen auf. Dieser dient zunächst der Versteifung der gesamten Abdeckung. Darüber hinaus ist der in der Stauposition untere Abschnitt des Kragens derart über seine gesamte Erstreckungslänge geradlinig nach unten schräggestellt, dass in Verschieberichtung angeordnetes Ladegut durch den unteren Abschnitt von den Rückenlehnen wegschiebbar ist. Der in der Stauposition untere Abschnitt ist derjenige Abschnitt des Kragens, der nach dem Verschieben gegenüber den anderen Abschnitten unten angeordnet ist. Die Verschieberichtung entspricht derjenigen Richtung, in die die Abdeckung verschoben wird, um die Abdeckung in die Stauposition zu bringen. Dies ermöglicht selbst dann ein Verschieben der Abdeckung in die Stauposition, wenn bereits Ladegut in der Verschieberichtung angeordnet ist. Der schräggestellte untere Abschnitt drückt dann gegen das Ladegut, wie beispielsweise einen Getränkekasten, und drückt diesen aufgrund der Schrägstellung von der Rückenlehne weg. Ist dies geschehen, so kann die Abdeckung weiter nach unten in die Stauposition verschoben werden. Alternativ ist der in der Stauposition untere Abschnitt des Kragens ganz oder teilweise ausgespart. Dies bedeutet, der Kragen ist in diesem Abschnitt ganz oder teilweise unterbrochen. Auf diese Weise benötigt die Abdeckung lediglich einen schmalen Bereich zwischen der Rückenlehne und dem evtl. bereits vorhandenen Ladegut, so dass bei dieser Ausführungsform eine Kollision der Abdeckung mit dem im Laderaum befindlichen Ladegut weitgehend ausgeschlossen ist.

In einer bevorzugten Ausführungsform der erfindungsgemäßen Laderaumabdeckeinrichtung ist die Abdeckung in der Abdeckposition horizontal ausgerichtet. Hierdurch kann die Abdeckung in der Abdeckposition auch zum Auflegen von Gegenständen verwendet werden, ohne dass diese herunterrollen oder -gleiten können.

In einer besonders bevorzugten Ausführungsform der erfindungsgemäßen Laderaumabdeckeinrichtung ist die Abdeckung in der Stauposition parallel zu den Rücklehnen ausgerichtet. Auf diese Weise kann die Abdeckung in der Stauposition besonders nah bei den Rückenlehnen angeordnet sein, ohne dass diese besonders viel Raum innerhalb des Laderaums beansprucht.

Um ein ungewolltes Verschieben oder Verrutschen der Abdeckung zu verhindern, ist die Abdeckung in einer weiteren bevorzugten Ausführungsform der erfindungsgemäßen Laderaumabdeckeinrichtung derart geführt, dass diese in der Abdeckposition und in jeder Schwenkposition vor der Zwischenposition in Längsrichtung unverschiebbar ist. Eine Verschiebung der Abdeckung ist somit nur nach Erreichen der Zwischenposition möglich, wodurch die Handhabung stark vereinfacht ist.

In einer vorteilhaften Ausführungsform der erfindungsgemäßen Laderaumabdeckeinrichtung ist ein Halte- und Schwenkmechanismus vorgesehen, der ein Verschwenken um die vordere Schwenkachse ermöglicht und ein Verschieben der Abdeckung in Längsrichtung verhindert, wenn sich die Abdeckung in der Abdeckposition oder in einer Schwenkposition vor der Zwischenposition befindet, wobei der Halte-/Schwenkmechanismus derart ausgebildet ist, dass die Abdeckung bei Erreichen der Zwischenposition freigegeben und in Längsrichtung in die Stauposition verschoben werden kann.

Gemäß einer weiteren vorteilhaften Ausführungsform der erfindungsgemäßen Laderaumabdeckeinrichtung umfasst der Halte- und Schwenkmechanismus einen vorspringenden Ansatz an der Seitenwand des Kraftfahrzeugs und eine nach unten weisende Vertiefung an der Abdeckung. Der vorspringende Ansatz kann beispielsweise ein hervorstehender Bolzen sein. Der vorspringende Ansatz ist in der Abdeckposition und jeder Schwenkposition vor der Zwischenposition in der Vertiefung angeordnet, wobei die Abdeckung in der Zwischenposition derart an einem fahrzeugseitigen Anschlag abgestützt ist, dass der vorspringende Ansatz durch Anheben der Abdeckung aus der Vertiefung gelangt. Die Abdeckung muss demzufolge lediglich in die Zwischenposition verschwenkt werden, um von dem Halte- und Schwenkmechanismus freigegeben und verschoben werden zu können. Der Halte- und Schwenkmechanismus dieser Ausführungsform ist somit besonders einfach und störungsunanfällig aufgebaut.

In einer weiteren vorteilhaften Ausführungsform der erfindungsgemäßen Laderaumabdeckeinrichtung umfasst der Halte- und Schwenkmechanismus einen vorspringenden Ansatz an der Abdeckung und eine nach oben weisende Vertiefung an der Seitenwand des Kraftfahrzeugs, wobei der vorspringende Ansatz in der Abdeckposition und jeder Schwenkposition vor der Zwischenposition in der Vertiefung angeordnet ist, wobei die Abdeckung in der Zwischenposition derart an einem fahrzeugseitigen Anschlag abgestützt ist, dass der vorspringende Ansatz durch Anheben der Abdeckung aus der Vertiefung gelangt. Es gelten die Vorteile der zuvor genannten Ausführungsform.

Um den Bewegungsablauf der Abdeckung genau festzulegen, ist in einer weiteren bevorzugten Ausführungsform der erfindungsgemäßen Laderaumabdeckeinrichtung eine Führung an der Seitenwand des Kraftfahrzeugs vorgesehen, wobei die Führung einen horizontalen Stützabschnitt, an dem die Abdeckung in der Abdeckposition abgestützt ist, und einen daran anschließenden schräg nach unten führenden Führungsabschnitt umfasst.

Um die Teileanzahl und somit den Montageaufwand der Laderaumabdeckeinrichtung zu verringern dient der Führungsabschnitt in einer weiteren bevorzugten Ausführungsform der erfindungsgemäßen Laderaumabdeckung gleichzeitig als der fahrzeugseitige Anschlag für die Abdeckung. So könnte sich das vordere Ende der Abdeckung an dem Führungsabschnitt abstützen, um ein Anheben und somit die Freigabe der Abdeckung in der Zwischenposition zu bewirken.

Das erfindungsgemäße Kraftfahrzeug weist eine Laderaumabdeckeinrichtung der zuvor beschriebenen Art auf.

In einer bevorzugten Ausführungsform des erfindungsgemäßen Kraftfahrzeugs erstreckt sich die Abdeckung zwischen einem Laderaum und einem Laderaumdeckel des Kraftfahrzeugs.

Die Erfindung wird im Folgenden anhand von beispielhaften Ausführungsformen unter Bezugnahme auf die beigefügten Zeichnungen näher erläutert. Während die Fig. 1 bis 5 lediglich dem besseren Verständnis der Erfindung dienen, nicht aber eine Ausführungsform der Erfindung darstellen, zeigen die Fig. 6 und 7 zwei alternative Ausführungsformen der Abdeckung zur Verwendung in der erfindungsgemäßen Laderaumabdeckeinrichtung . Im Einzelnen zeigen:

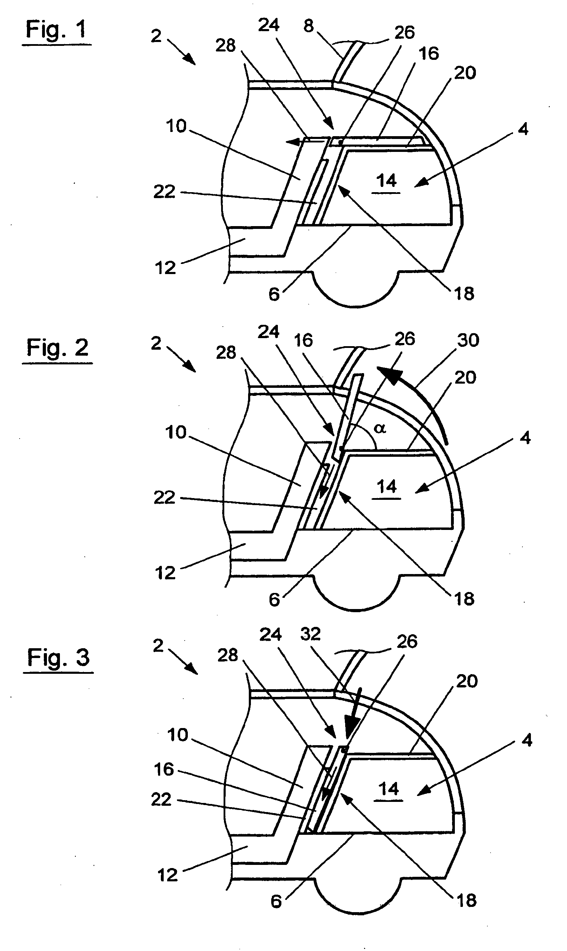

- Fig. 1: eine schematische Seitenansicht eines Kraftfahrzeugs mit einer Laderaumabdeckeinrichtung mit der Abdeckung in der Abdeckposition,
- Fig. 2: die Laderaumabdeckeinrichtung von Fig. 1 mit der Abdeckung in der Zwischenposition,
- Fig. 3: die Laderaumabdeckeinrichtung von Fig. 1 und 2 mit der Abdeckung in der Stauposition,

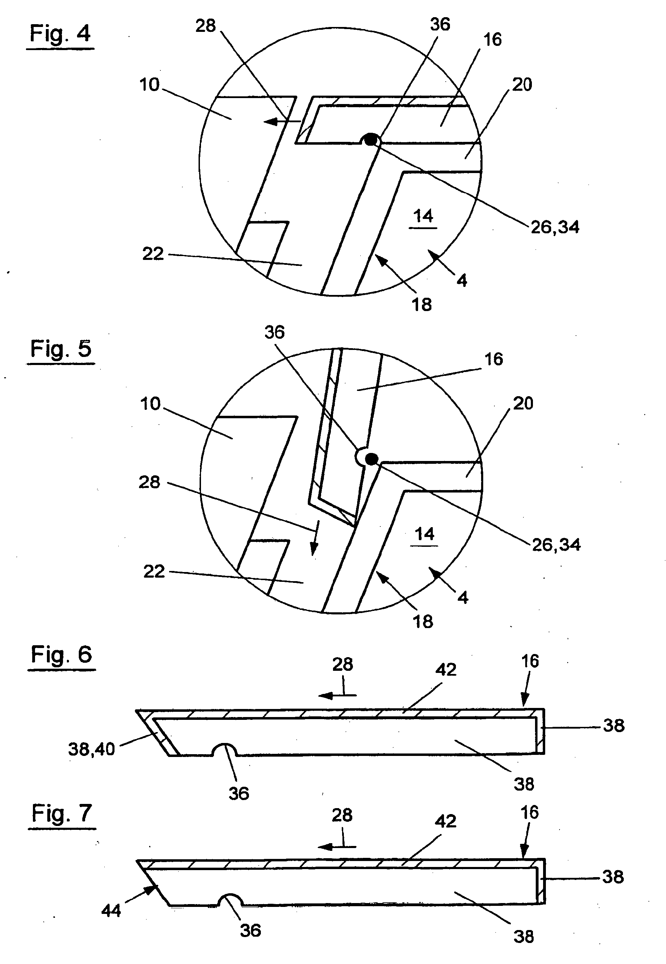

- Fig. 4: eine vergrößerte Darstellung des Halte-/Schwenkmechanismus von Fig. 1,
- Fig. 5: eine vergrößerte Darstellung des Halte-/Schwenkmechanismus von Fig. 2,
- Fig. 6: eine Querschnittsansicht einer ersten Ausführungsform der Abdeckung zur Verwendung in der erfindungsgemäßen Laderaumabdeckeinrichtung und
- Fig. 7: eine Querschnittsansicht einer zweiten Ausführungsform der Abdeckung zur Verwendung in der erfindungsgemäßen Laderaumabdeckeinrichtung.

Fig. 1 zeigt eine schematische Seitenansicht eines teilweise dargestellten Kraftfahrzeugs 2. Das Kraftfahrzeug 2 weist einen Laderaum 4 auf, der nach unten durch einen Laderaumboden 6, nach hinten durch einen Laderaumdeckel 8, der in den Figuren aufgeklappt ist, und nach vorne durch die Rückenlehnen 10 der Rücksitze 12 des Kraftfahrzeugs 2 begrenzt ist. Zu den Seiten ist der Laderaum 4 durch die Seitenwände 14 begrenzt, von denen in den Figuren lediglich eine zu sehen ist.

Es ist ferner eine Abdeckung 16 vorgesehen, die sich in der dargestellten Abdeckposition zwischen den Laderaum 4 und den Laderaumdeckel 8 erstreckt und somit in der Abdeckposition die obere Begrenzung des Laderaums 4 darstellt. An den Seitenwänden 14 ist jeweils eine Führung 18 vorgesehen. Die Führung 18 setzt sich aus einem horizontalen Stützabschnitt 20, an dem die Abdeckung 16 in der Abdeckposition abgestützt ist, so dass die Abdeckung 16 in der Abdeckposition horizontal ausgerichtet ist, und einem sich in Richtung der Rückenlehnen 10 anschließenden schräg nach unten zum Laderaumboden 6 führenden Führungsabschnitt 22. Der Führungsabschnitt 22 weist dieselbe Neigung wie die Rückenlehnen 10 auf. Im Bereich des Übergangs zwischen dem Stützabschnitt 20 und dem Führungsabschnitt 22 ist ferner ein Halte-/Schwenkmechanismus 24 vorgesehen, dessen Funktionsweise später erläutert wird und der ein Verschwenken der Abdeckung 16 um eine Schwenkachse 26 quer zu der Längsrichtung 28 der Abdeckung 16 ermöglicht.

Nachstehend wird die grundsätzliche Funktionsweise der Laderaumabdeckeinrichtung unter Bezugnahme auf die Fig. 1 bis 3 beschrieben. Die Abdeckung 16 wird zunächst von der in Fig. 1 dargestellten Abdeckposition, in der der Laderaum 4 durch die Abdeckung 16 von oben abgedeckt ist, um die vordere Schwenkachse 26 in eine Zwischenposition verschwenkt, wie dies in Fig. 2 anhand des Pfeils 30 dargestellt ist. In der Zwischenposition ist die Abdeckung um einen vorbestimmten Winkel α, in diesem Fall α=70°, gegenüber der Abdeckposition um die Schwenkachse 26 verschwenkt.

In der Abdeckposition und allen Schwenkpositionen vor der Zwischenposition kann die Abdeckung 16 nicht in Längsrichtung 28 verschoben werden. Ist jedoch die Zwischenposition (Fig. 2) erreicht, so kann die Abdeckung 16 in Längsrichtung 28 entlang des Führungsabschnitts 22 der Führung 18 nach unten in eine Stauposition verschoben werden, wie dies in Fig. 3 anhand des Pfeils 32 angedeutet ist. In der Stauposition ist die Abdeckung 16 hinter und parallel zu den Rückenlehnen 10 der Rücksitze 12 angeordnet, wodurch die Abdeckung 16 nur wenig Raum innerhalb des Laderaums 4 beansprucht.

In den Fig. 4 und 5 ist der Halte-/Schwenkmechanismus 24 vergrößert dargestellt. Bei der dargestellten Ausführungsform umfasst der Halte-/Schwenkmechanismus 24 jeweils einen bolzenförmigen vorspringenden Ansatz 34 an den Seitenwänden 14 des Kraftfahrzeugs 2 und jeweils eine seitliche nach unten weisende Vertiefung 36 an der Abdeckung 16. Die Abdeckung 16 liegt derart auf dem vorspringenden Ansatz 34 auf, dass der vorspringende Ansatz 34 in der Abdeckposition (Fig. 4) und in jeder Schwenkposition vor der Zwischenposition in der Vertiefung 36 angeordnet ist. Somit ist in den genannten Positionen der Abdeckung 16 einerseits ein Verschwenken der Abdeckung 16 um die Schwenkachse 26 ermöglicht und andererseits ein Verschieben der Abdeckung 16 in deren Längsrichtung 28 unterbunden. Wird die Abdeckung 16 jedoch in die Zwischenposition verschwenkt, die in Fig. 5 gezeigt ist, so ist ein vorderer Teil der Abdeckung 16 derart an einem fahrzeugseitigen Anschlag, bei dem es sich hier um den Führungsabschnitt 22 handelt, abgestützt, dass die Abdeckung 16 angehoben wird und der vorspringende Ansatz 34 aus der Vertiefung 36 gelangt. Die Abdeckung 16 ist somit freigegeben und kann, wie bereits zuvor erläutert, in Längsrichtung 28 in die Stauposition verschoben werden.

Die Fig. 4 und 5 zeigen lediglich eine Ausführungsform des Halte-/Schwenkmechanismus 24. In einer weiteren Ausführungsform kann der vorspringende Ansatz jeweils seitlich an der Abdeckung vorgesehen sein, während in den Seitenwänden eine nach oben weisende Vertiefung vorgesehen ist. Die grundlegende Funktionsweise entspricht wiederum der Funktionsweise der in den Fig. 4 und 5 gezeigten Ausführungsform.

Fig. 6 zeigt eine erste Ausführungsform der Abdeckung 16 zur Verwendung in der erfindungsgemäßen Laderaumabdeckeinrichtung. Hier weist die Abdeckung 16 einen äußeren, nach unten weisenden, umlaufenden Kragen 38 auf. Der in die Längsrichtung 28 weisende Abschnitt 40 des Kragens 38, der in der Stauposition (Fig. 3) der Abdeckung 16 unten angeordnet ist, ist dabei derart gegenüber einem plattenartigen Bereich 42 der Abdeckung 16 schräggestellt, dass ein in Verschieberichtung, die hier der Längsrichtung 28 entspricht, angeordnetes Ladegut (nicht dargestellt) auf dem Laderaumboden 6 durch den Abschnitt 40 von den Rückenlehnen 10 nach hinten weggeschoben wird. Das Ladegut kann ein Verschieben der Abdeckung 16 in die Stauposition also nicht verhindern.

Fig. 7 zeigt eine zweite Ausführungsform der Abdeckung 16 zur Verwendung in der erfindungsgemäßen Laderaumabdeckeinrichtung, die sich von der Ausführungsform von Fig. 6 dahingehend unterscheidet, dass der in die Längsrichtung 28 weisende Abschnitt des Kragens 38, der in der Stauposition (Fig. 3) der Abdeckung 16 unten angeordnet wäre, vollständig oder teilweise ausgespart ist. So tritt an die Stelle dieses Abschnitts eine Aussparung 44. Dies hat den Vorteil, dass derjenige Teil der Abdeckung, der mit Ladegut innerhalb des Laderaums 4 kollidieren könnte, sehr schmal ausgebildet ist, so dass es in den meisten Fällen während des Verschiebens der Abdeckung 16 nicht zu einer Kollision zwischen dem Ladegut und der Abdeckung 16 kommt.

### Bezugszeichenliste

- 2: Kraftfahrzeug
- 4: Laderaum
- 6: Laderaumboden
- 8: Laderaumdeckel
- 10: Rückenlehnen
- 12: Rücksitze
- 14: Seitenwände
- 16: plattenförmige Abdeckung
- 18: Führung
- 20: Stützabschnitt
- 22: Führungsabschnitt
- 24: Halte-/Schwenkmechanismus
- 26: Schwenkachse
- 28: Längsrichtung der Abdeckung
- 30: Pfeil
- 32: Pfeil
- 34: vorspringender Ansatz
- 36: Vertiefung
- 38: Kragen
- 40: Abschnitt des Kragens
- 42: plattenartiger Bereich
- 44: Aussparung

- α: vorbestimmter Winkel

## Patentansprüche

1. Laderaumabdeckeinrichtung für ein Kraftfahrzeug mit einer um eine vordere Schwenkachse (26) verschwenkbaren plattenförmigen Abdeckung (16) mit einem äußeren, nach unten weisenden, umlaufenden Kragen (38), wobei die Abdeckung (16) von einer Abdeckposition, in der der Laderaum (4) durch die Abdeckung (16) von oben abgedeckt ist, um die vordere Schwenkachse (26) in eine Zwischenposition verschwenkbar ist, in der die Abdeckung (16) um einen vorbestimmten Winkel (α) verschwenkt ist, und aus der Zwischenposition in Längsrichtung (28) nach unten in eine Stauposition verschiebbar ist, in der die Abdeckung (16) hinter den Rückenlehnen (10) der Rücksitze (12) angeordnet ist, **dadurch gekennzeichnet**, **dass** der in der Stauposition untere Abschnitt (40) des Kragens (38) entweder derart über seine gesamte Erstreckungslänge nach unten schräggestellt ist, dass in Verschieberichtung angeordnetes Ladegut durch den unteren Abschnitt (40) von den Rückenlehnen (10) wegschiebbar ist, oder ganz oder teilweise ausgespart ist.

2. Laderaumabdeckeinrichtung nach Anspruch 1, **dadurch gekennzeichnet**, **dass** die Abdeckung (16) in der Abdeckposition horizontal ausgerichtet ist.

3. Laderaumabdeckeinrichtung nach einem der Ansprüche 1 oder 2, **dadurch gekennzeichnet**, **dass** die Abdeckung (16) in der Stauposition parallel zu den Rücklehnen ausgerichtet ist.

4. Laderaumabdeckeinrichtung nach einem der vorangehenden Ansprüche, **dadurch gekennzeichnet**, **dass** die Abdeckung (16) derart geführt ist, dass diese in der Abdeckposition und in jeder Schwenkposition vor der Zwischenposition in Längsrichtung (28) unverschiebbar ist.

5. Laderaumabdeckeinrichtung nach einem der vorangehenden Ansprüche, **dadurch gekennzeichnet**, **dass** ein Halte-/Schwenkmechanismus (24) vorgesehen ist, der ein Verschwenken um die vordere Schwenkachse (26) ermöglicht und ein Verschieben der Abdeckung (16) in Längsrichtung (28) verhindert, wenn sich die Abdeckung (16) in der Abdeckposition oder in einer Schwenkposition vor der Zwischenposition befindet, wobei der Halte-/Schwenkmechanismus (24) derart ausgebildet ist, dass die Abdeckung (16) bei Erreichen der Zwischenposition freigegeben und in Längsrichtung (28) in die Stauposition verschiebbar ist.

6. Laderaumabdeckeinrichtung nach Anspruch 5, **dadurch gekennzeichnet**, **dass** der Halte-/Schwenkmechanismus einen vorspringenden Ansatz (34) an der Seitenwand (14) des Kraftfahrzeugs (2) und eine nach unten weisende Vertiefung (36) an der Abdeckung (16) umfasst, wobei der vorspringende Ansatz (34) in der Abdeckposition und jeder Schwenkposition vor der Zwischenposition in der Vertiefung (36) angeordnet ist, wobei die Abdeckung (16) in der Zwischenposition derart an einem fahrzeugseitigen Anschlag abgestützt ist, dass der vorspringende Ansatz (34) durch Anheben der Abdeckung (16) aus der Vertiefung (36) gelangt.

7. Laderaumabdeckeinrichtung nach Anspruch 5, **dadurch gekennzeichnet**, **dass** der Halte-/Schwenkmechanismus einen vorspringenden Ansatz an der Abdeckung und eine nach oben weisende Vertiefung an der Seitenwand des Kraftfahrzeugs umfasst, wobei der vorspringende Ansatz in der Abdeckposition und jeder Schwenkposition vor der Zwischenposition in der Vertiefung angeordnet ist, wobei die Abdeckung in der Zwischenposition derart an einem fahrzeugseitigen Anschlag abgestützt ist, dass der vorspringende Ansatz durch Anheben der Abdeckung aus der Vertiefung gelangt.

8. Laderaumabdeckeinrichtung nach einem der vorangehenden Ansprüche, **dadurch gekennzeichnet**, **dass** eine Führung (18) an der Seitenwand (14) des Kraftfahrzeugs (2) vorgesehen ist, wobei die Führung (18) einen horizontalen Stützabschnitt (20), an dem die Abdeckung (16) in der Abdeckposition abgestützt ist, und einen daran anschließenden schräg nach unten führenden Führungsabschnitt (22) umfasst.

9. Laderaumabdeckeinrichtung nach Anspruch 8, dadurch ge**kennzeichnet, dass** der Führungsabschnitt (22) der fahrzeugseitige Anschlag für die Abdeckung (16) ist.

10. Kraftfahrzeug mit einer Laderaumabdeckeinrichtung nach einem der vorangehenden Ansprüche.

11. Kraftfahrzeug nach Anspruch 10, **dadurch gekennzeichnet**, **dass** sich die Abdeckung (16) zwischen einem Laderaum (4) und einem Laderaumdeckel (8) des Kraftfahrzeugs erstreckt.

## Claims

1. A cargo bay cover device for a motor vehicle, comprising a plate-shaped cover (16) which is rotatable about a front pivoting axis (26) and comprises an outer circumferential collar (38) which faces downwardly, wherein the cover (16) is pivotable from a covering position in which the cargo bay (4) is covered by the cover (16) from above, about the front pivoting axis (26) to an intermediate position in which the cover (16) is pivoted about a predetermined angle (α), and can be displaced from the intermediate position downwardly in the longitudinal direction (28) to a stowage position in which the cover (16) is arranged behind the backrests (10) of the rear seats (12), **characterized in that** the section (40) of the collar (38) which is at the bottom in the stowage position, is either obliquely positioned downwardly in a straight line over its entire length of extension in such a way that cargo arranged in the direction of displacement can be pushed away from the backrests (10) by the bottom section (40), or is left open in part or in full.

2. The cargo bay cover device according to claim 1, **characterized in that** the cover (16) is horizontally aligned in the covering position.

3. The cargo bay cover device according to one of the claims 1 or 2, **characterized in that** the cover (16) is aligned in parallel to the backrests in the stowage position.

4. The cargo bay cover device according to one of the preceding claims, **characterized in that** the cover (16) is guided in such a way that it is non-displaceable in the longitudinal direction (28) in the covering position and in each pivoting position ahead of the intermediate position.

5. The cargo bay cover device according to one of the preceding claims, **characterized in that** a retaining/pivoting mechanism (24) is provided which allows pivoting about the front pivoting axis (26) and prevents a displacement of the cover (16) in the longitudinal direction (28) when the cover (16) is situated in the covering position or in a pivoting position ahead of the intermediate position, wherein the retaining/pivoting mechanism (24) is arranged in such a way that the cover (16) is released upon reaching the intermediate position and is displaceable to the stowage position in the longitudinal direction (28).

6. The cargo bay cover device according to claim 5, **characterized in that** the retaining/pivoting mechanism comprises a projecting lug (34) on the side wall (14) of the motor vehicle (2) and a downwardly facing depression (36) on the cover (16), wherein the projecting lug (34) is arranged in the depression in the covering position and each pivoting position ahead of the intermediate position (36), wherein the cover (16) is supported in the intermediate position on a stop on the vehicle side in such a way that the projecting lug (34) comes out of the depression (36) by lifting the cover (16).

7. The cargo bay cover device according to claim 5, **characterized in that** the retaining/pivoting mechanism comprises a projecting lug on the cover and an upwardly facing depression on the side wall of the motor vehicle, wherein the projecting lug is arranged in the depression in the covering position and each pivoting position ahead of the intermediate position, wherein the cover is supported in the intermediate position on a stop on the vehicle side in such a way that the projecting lug comes out of the depression by lifting the cover.

8. The cargo bay cover device according to one of the preceding claims, **characterized in that** a guide (18) is provided on the side wall (14) of the motor vehicle (2), wherein the guide (18) comprises a horizontal support section (20) on which the cover (16) is supported in the covering position, and comprises a guide section (22) which is adjacent thereto and leads downwardly in an oblique manner.

9. The cargo bay cover device according to claim 8, **characterized in that** the guide section (22) is the stop on the vehicle side for the cover (16).

10. A motor vehicle with a cargo bay cover device according to one of the preceding claims.

11. The motor vehicle according to claim 10, **characterized in that** the cover (16) extends between a cargo bay (4) and a cargo bay cover plate(8) of the motor vehicle.

## Revendications

1. Dispositif de couverture d'espace de chargement pour un véhicule à moteur avec une couverture (16) en forme de panneau pouvant pivoter autour d'un axe de pivotement antérieur (26), munie d'un bourrelet circonférentiel extérieur (38) orienté vers le bas, dans lequel la couverture (16) peut pivoter autour de l'axe de pivotement antérieur (26) d'une position de couverture dans laquelle l'espace de chargement (4) est couvert par dessus par la couverture (16) à une position intermédiaire dans laquelle la couverture (16) est pivotée selon un angle (α) prédéterminé, et peut effectuer une translation vers le bas dans le sens longitudinal (28) vers une position de rangement dans laquelle la couverture (16) est disposée derrière les dossiers (10) des sièges arrière (12), **caractérisé en ce que** dans la position de rangement, la partie inférieure (40) du bourrelet (38) est soit placée en oblique en ligne droite vers le bas sur toute sa longueur d'extension, de telle façon qu'une cargaison disposée dans le sens de translation puisse être écartée des dossiers (10) par la partie inférieure (40), soit entièrement ou partiellement découpée.

2. Dispositif de couverture d'espace de chargement selon la revendication 1, **caractérisé en ce que** la couverture (16) est orientée à l'horizontale dans la position de couverture.

3. Dispositif de couverture d'espace de chargement selon l'une des revendications 1 ou 2, **caractérisé en ce que** la couverture (16) est orientée parallèlement aux dossiers dans la position de rangement.

4. Dispositif de couverture d'espace de chargement selon l'une des revendications précédentes, **caractérisé en ce que** la couverture (16) est guidée de telle façon qu'elle n'est pas capable de translation dans la position de couverture ni dans aucune des positions de pivotement précédant la position intermédiaire dans le sens longitudinal (28).

5. Dispositif de couverture d'espace de chargement selon l'une des revendications précédentes, **caractérisé en ce qu'**il est prévu un mécanisme de maintien et de pivotement (24) qui permet un pivotement autour de l'axe de pivotement antérieur (26) et empêche une translation de la couverture (16) dans le sens longitudinal (28) quand la couverture (16) se trouve dans la position de couverture ou dans une position de pivotement située avant la position intermédiaire, le mécanisme de maintien et de pivotement (24) étant conformé de telle manière que la couverture (16) est libérée quand elle atteint la position intermédiaire et peut être déplacée dans le sens longitudinal (28) jusqu'à la position de rangement.

6. Dispositif de couverture d'espace de chargement selon la revendication 5, **caractérisé en ce que** le mécanisme de maintien et de pivotement comprend un rebord en saillie (34) sur la paroi latérale (14) du véhicule à moteur (2) et un renfoncement (36) orienté vers le bas sur la couverture (16), le rebord en saillie (34) étant disposé dans le renfoncement (36) dans la position de couverture et chaque position de pivotement précédant la position intermédiaire, la couverture (16) s'appuyant, dans la position intermédiaire, sur une butée formée du côté du véhicule, de telle façon que le rebord en saillie (34)
sorte du renfoncement (36) quand la couverture (16) est soulevée.

7. Dispositif de couverture d'espace de chargement selon la revendication 5, **caractérisé en ce que** le mécanisme de maintien et de pivotement comprend un rebord en saillie sur la couverture et un renfoncement orienté vers le bas sur la paroi latérale du véhicule à moteur, le rebord en saillie étant disposé dans le renfoncement dans la position de couverture et chaque position de pivotement précédant la position intermédiaire, la couverture s'appuyant, dans la position intermédiaire, sur une butée formée du côté du véhicule, de telle façon que le rebord en saillie sort du renfoncement quand la couverture est soulevée.

8. Dispositif de couverture d'espace de chargement selon l'une des revendications précédentes, **caractérisé en ce qu'**il est prévu un guide (18) sur la paroi latérale (14) du véhicule à moteur (2) lequel guide (18) présente une partie d'appui horizontale (20) sur laquelle la couverture (16) s'appuie dans la position de couverture, et une partie de guidage (22) qui lui fait suite et se dirige en oblique vers le bas.

9. Dispositif de couverture d'espace de chargement selon la revendication 8, **caractérisé en ce que** la partie de guidage (22) est la butée pour la couverture (16) du côté du véhicule.

10. Véhicule à moteur avec un dispositif de couverture d'espace de chargement selon l'une des revendications précédentes.

11. Véhicule à moteur selon la revendication 10, **caractérisé en ce que** la couverture (16) s'étend entre un espace de chargement (4) et un capot d'espace de chargement (8) du véhicule à moteur.
